# FASCICULE DE BREVET EUROPEEN

(11) **EP 3 583 018 B1**
(45) Date de publication et mention de la délivrance du brevet: **08.12.2021**
(21) Numéro de dépôt: 18704925.9
(22) Date de dépôt: 02.02.2018
(51) Int. Cl.: B62D 27/02, B62D 21/11, B62D 29/00

(54) **STRUCTURE DE BERCEAU AVANT DE VÉHICULE AUTOMOBILE EN ALUMINIUM RIVETÉ ET COLLÉ**
VORDERWAGENSTRUKTUR EINES KRAFTFAHRZEUGS AUS GENIETETEM UND GEBONDETEM ALUMINIUM
MOTOR VEHICLE FRONT CRADLE STRUCTURE MADE OF RIVETED AND BONDED ALUMINIUM

(30) Priorité: 15.02.2017 FR 1751210
(43) Date de publication de la demande: 25.12.2019
(73) Titulaire: Renault S.A.S., 92100 Boulogne-Billancourt (FR)
(72) Inventeur: ESTIOT, Christophe, 28100 Dreux (FR); FERREIRA, Jonathan, 75015 Paris (FR)
(86) Numéro de dépôt international: PCT/EP2018/052680
(87) Numéro de publication internationale: WO 2018/149668

(56) Documents cités:
- EP-A1- 1 010 606
- DE-A1- 19 744 312
- DE-A1-102013 225 080
- DE-A1-102014 005 007
- DE-A1-102014 005 010

## Description

### DOMAINE TECHNIQUE DE L'INVENTION

L'invention concerne une structure de berceau de véhicule automobile réalisée en aluminium ou en alliage d'aluminium.

### ARRIERE PLAN TECHNIQUE DE L'INVENTION

L'invention concerne plus particulièrement une structure de berceau, notamment de berceau avant de véhicule automobile, qui est d'une grande légèreté. Le document DE 10 2014 005007 A1 décrit une structure de berceau de véhicule automobile selon le préambule de la revendication 1.

Il a déjà été proposé de réaliser tout ou partie d'une structure de berceau avant en aluminium, et notamment ses longerons latéraux et sa ou ses traverses avant et/ou arrière.

Une telle structure doit présenter différentes caractéristiques notamment quant à sa rigidité, sa capacité à absorber de l'énergie en cas de chocs, et elle doit aussi permettre d'assurer sa fixation en ancrage sur la structure de caisse du véhicule.

Elle doit aussi permettre d'intégrer aisément les diverses interfaces de fixation des composants de liaison au sol tels que des triangles de suspension.

De la même manière, il doit aussi être possible de fixer de manière simple et rigide d'autres équipements ou accessoires tels que par exemple un système de crémaillère de direction du véhicule dans le cas d'une structure de berceau avant.

L'assemblage et la solidarisation des composants principaux constitutifs de la structure de berceau doit permettre d'assurer un positionnement relatif précis de ces composants, en même temps qu'une tenue mécanique suffisante de l'ensemble.

Dans le cas d'une structure de berceau en aluminium, il a déjà été proposé de réaliser les différents assemblages par soudage.

Une telle technique nécessite des moyens d'assemblage et de pré-positionnement qui sont complexes à mettre en œuvre, notamment dans le cadre de la réalisation d'un véhicule en petite ou moyenne série pour lequel de tels investissements peuvent s'avérer incompatibles.

Afin de réduire ces investissements, il est proposé de réaliser un assemblage simple et sans moyens structurels d'assemblage liés à une unité de production.

Il est ainsi proposé de faire appel à des techniques d'assemblage et de fixation par collage en combinaison avec une fixation par des rivets.

Ce type d'assemblage permet, grâce à l'utilisation de rivets, d'assurer des mises en référence des pièces les unes par rapport aux autres.

L'utilisation de séries de rivets permet de presser ou plaquer les surfaces collées entre elles sans faire appel à des moyens supplémentaires de serrage qui sont traditionnellement intégrés aux installations d'assemblage telles que par exemple pour la mise en œuvre de la technique de soudage.

L'invention vise à proposer un perfectionnement d'une telle structure de berceau de véhicule automobile afin d'en améliorer la rigidité, notamment à travers la fiabilité des assemblages par collage.

### BREF RESUME DE L'INVENTION

Dans ce but, l'invention propose une structure de berceau de véhicule automobile comportant :
- au moins deux longerons en aluminium ou en alliage d'aluminium qui sont espacés transversalement ;
- au moins une traverse, d'orientation transversale, en aluminium ou en alliage d'aluminium qui relie entre eux les deux longerons ;
   structure dans laquelle la traverse est solidarisée aux longerons de manière non démontable par collage en combinaison avec une fixation par rivets,
   caractérisée en ce que des surfaces collées entre elles sont espacées d'un jeu dimensionnel déterminé apte à recevoir de la colle ou un agent adhésif, et en ce que au moins une zone de collage comporte une surface munie d'éléments en relief qui coopèrent avec une surface en vis-à-vis.

Selon d'autres caractéristiques de l'invention :
- les éléments en relief déterminent un jeu dimensionnel sensiblement constant entre la surface et la surface en vis-à-vis ;
- la surface munie d'éléments en relief est une surface plane
- la surface est munie d'au moins un plot en relief ;
- la surface plane est munie d'une série de plots en relief répartis sur ladite surface ;
- la surface est munie d'au moins une nervure en relief ;
- la surface est munie d'une série de nervures en relief réparties sur la surface ;
- chaque longeron comporte au moins une portion de paroi ou une portion d'aile dont une surface est collée et fixée par des rivets à la traverse ;
- la surface collée est agencée à une extrémité longitudinale du longeron ;
- la surface collée est une surface plane ;
- chaque longeron comporte deux portions de paroi ou d'aile comportant chacune une surface plane, qui sont parallèles et opposées et dont chacune est collée et fixée par des rivets à la traverse ;
- la traverse comporte au moins une portion de paroi ou une portion d'aile dont une surface est collée et fixée par des rivets à un longeron ;
- la surface est agencée à une extrémité transversale de la traverse ;
- la surface est une surface plane ;
- la traverse comporte deux portions de paroi ou d'aile comportant chacune une surface plane, qui sont parallèles et opposées et dont chacune est collée et fixée par des rivets au longeron ;
- les surfaces collées entre elles sont des surfaces traitées, notamment par anodisation ;
- la structure constitue un berceau avant de véhicule automobile, et la traverse est une traverse avant du berceau avant;
- la structure comporte au moins un élément supplémentaire pour le montage d'un composant appartenant à une suspension du véhicule, et l'élément est en aluminium et est solidarisé à un longeron et/ou à la traverse de manière non démontable par collage en combinaison avec une fixation par rivets ;
- la structure comporte au moins une plaque de renfort en aluminium ou en alliage d'aluminium qui est fixée à un longeron et/ou à la traverse de manière non démontable par collage en combinaison avec une fixation par rivets ;
- chaque longeron et/ou la traverse est un élément en forme de caisson creux en aluminium ou en alliage d'aluminium.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue en perspective de dessous et de trois quarts avant d'une structure de berceau avant de véhicule automobile selon l'invention qui est représentée équipée d'un triangle inférieur avant gauche de suspension et d'un système de crémaillère de direction ;
- la figure 2 est une vue en perspective de dessus et de trois quarts arrière de la structure de berceau de la figure 1 ;

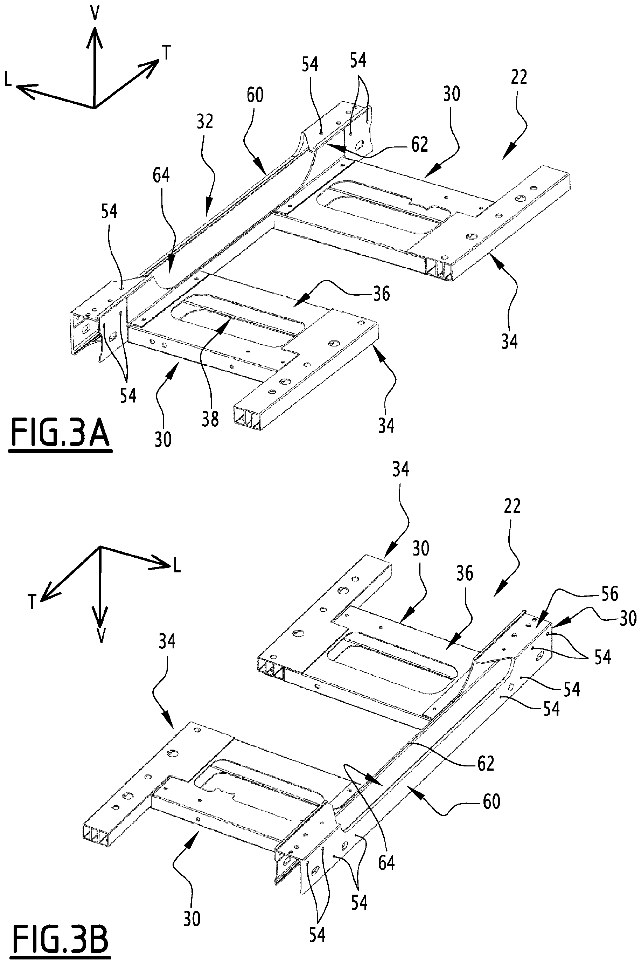

- la figure 3A est une vue analogue à celle de la figure 2 qui illustre la structure de berceau sans ses boîtiers arrière gauche et droit de fixation de la structure de berceau, sans ses deux chapes avant gauche et droite, et sans ses plaques de renfort ;
- la figure 3B est une vue analogue à celle de la figure 3A selon un autre angle de vue ;

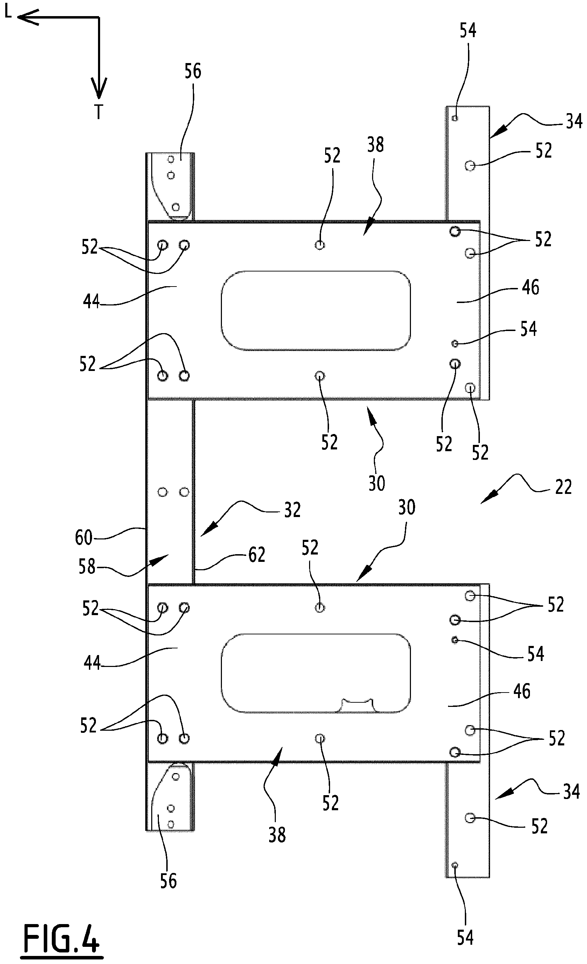

- la figure 4 est une vue de dessus de l'ensemble illustré aux figures 3A et 3B ;
- la figure 5 est une vue de dessus de l'ensemble illustré à la figure 2 ;
- la figure 6 est une vue en perspective du boîtier arrière gauche ;
- la figure 7 est une vue en perspective de la chape avant gauche ;

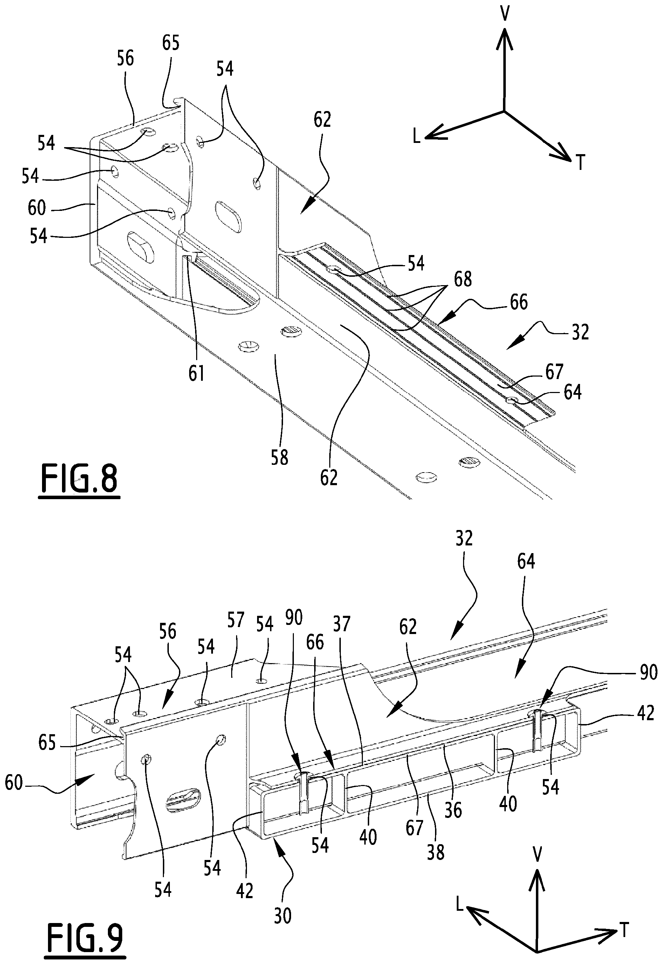

- la figure 8 est vue partielle en perspective de la traverse avant de la structure de berceau des figures 3A et 3B ;
- la figure 9 est vue en perspective de détail en section par le plan vertical et transversal selon la ligne 9-9 de la figure 5 ;
- la figure 10 est une vue en perspective de la traverse arrière gauche ;
- la figure 11 est une en perspective du longeron latéral gauche de la structure de berceau des figures 3A et 3B ;

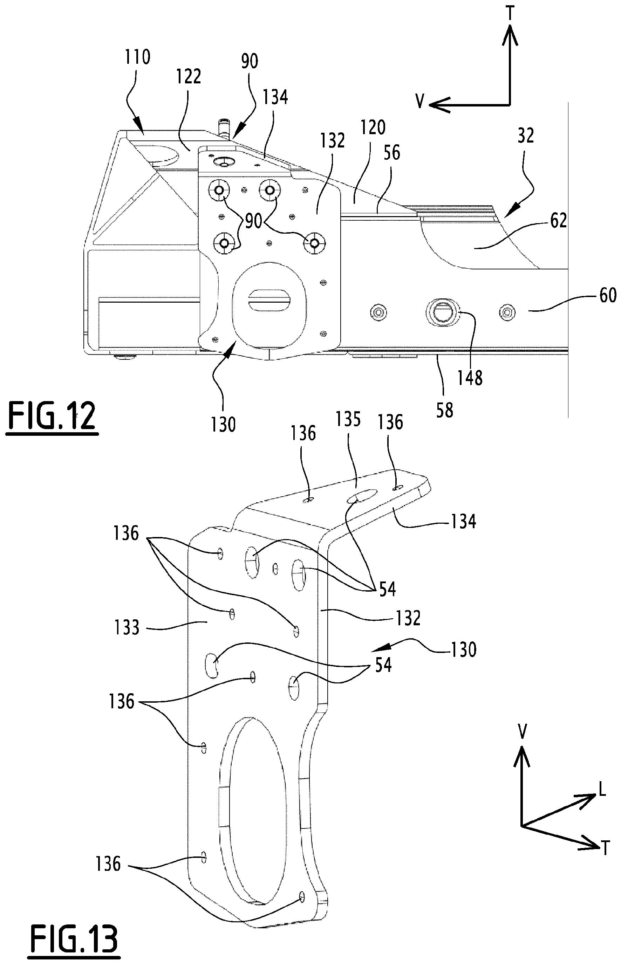

- la figure 12 est une vue de détail selon la flèche F12 de la figure 2 ;
- la figure 13 est une vue en perspective de la plaque de renfort arrière droit de la traverse avant visible à la figure 12 ;
- la figure 14 est une vue de face du carter de crémaillère de direction fixé sur la traverse avant de la structure de berceau de la figure 1 ;
- la figure 15 est une vue latérale en bout selon la flèche F15 de la figure 14 ;
- la figure 16 est une vue en section par un plan vertical et longitudinal selon la ligne 16-16 de la figure 14 ;
- la figure 17 est une vue de détail à grande échelle en section d'un rivet d'assemblage et de fixation selon la ligne 17-17 de la figure 5.

### DESCRIPTION DETAILLEE DES FIGURES

Dans la suite de la description, des éléments présentant une structure identique ou des fonctions analogues seront désignés par des mêmes références.

Dans la suite de la description, on adoptera de manière non limitative des orientations longitudinale, verticale et transversale indiquées par le trièdre "L,V,T" des figures. On définit aussi un plan horizontal qui s'étend longitudinalement et transversalement.

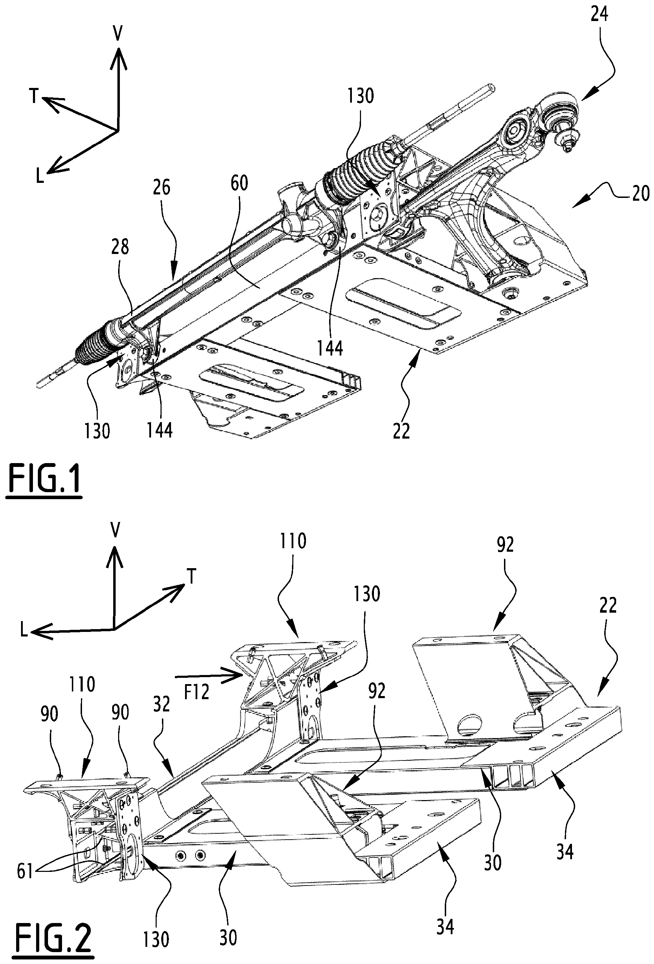

On a représenté à la figure 1, un ensemble 20 qui est constitué d'une structure de berceau avant 22 d'un véhicule automobile qui est ici équipée, à l'avant, de deux triangles inférieurs de suspension avant dont seul le triangle inférieur avant gauche 24 est illustré.

La structure de berceau avant 22 est aussi équipée à l'avant d'un système 26 de crémaillère de direction, de conception générale connue, qui comporte notamment un carter transversal 28 fixé sur la structure de berceau avant 22.

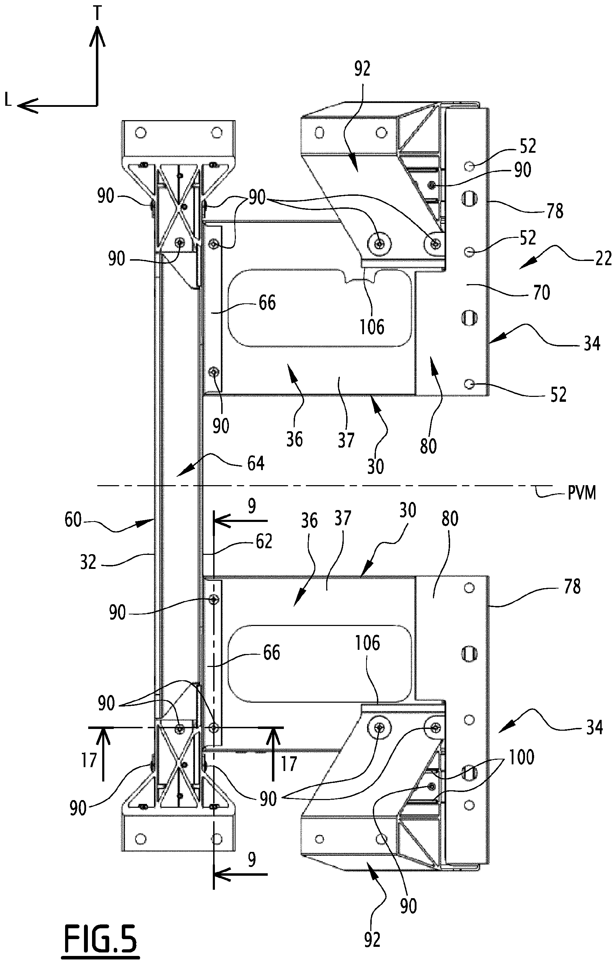

La structure de berceau avant 22 présente une symétrie générale de conception par rapport au plan longitudinal et vertical médian PVM indiqué à la figure 5.

La structure de berceau avant 22 est constituée pour l'essentiel de deux longerons latéraux 30, gauche et droit, qui sont espacés transversalement l'un par rapport à l'autre et par rapport au plan PVM, d'une traverse avant 32 qui est reliée et fixée aux extrémités avant des longerons 30, et de deux traverses arrière 34 (ou deux demi-traverses arrière) dont chacune est reliée à l'extrémité arrière d'un longeron associé 30.

Les longerons 30 et les traverses 32 et 34 sont ici réalisés à base de profilés en aluminium ou en alliage d'aluminium et leurs surfaces sont anodisées.

Ces pièces ou composants sont par exemple des pièces obtenues par moulage par extrusion notamment en raison du compromis rigidité/légèreté que permet d'obtenir une telle technique de production.

L'anodisation des pièces en aluminium ou en alliage d'aluminium permet notamment de garantir la meilleure tenue possible de la colle ou de l'adhésif adéquat entre les différentes surfaces de ces différents éléments structurels qui sont fixées par collage.

A titre d'exemple, la traverse avant 32 est une pièce extrudée, anodisée en Al 6082-HS, les traverses arrière 34 sont des pièces extrudées, anodisées en Al 6063-T66 de même que les longerons 30.

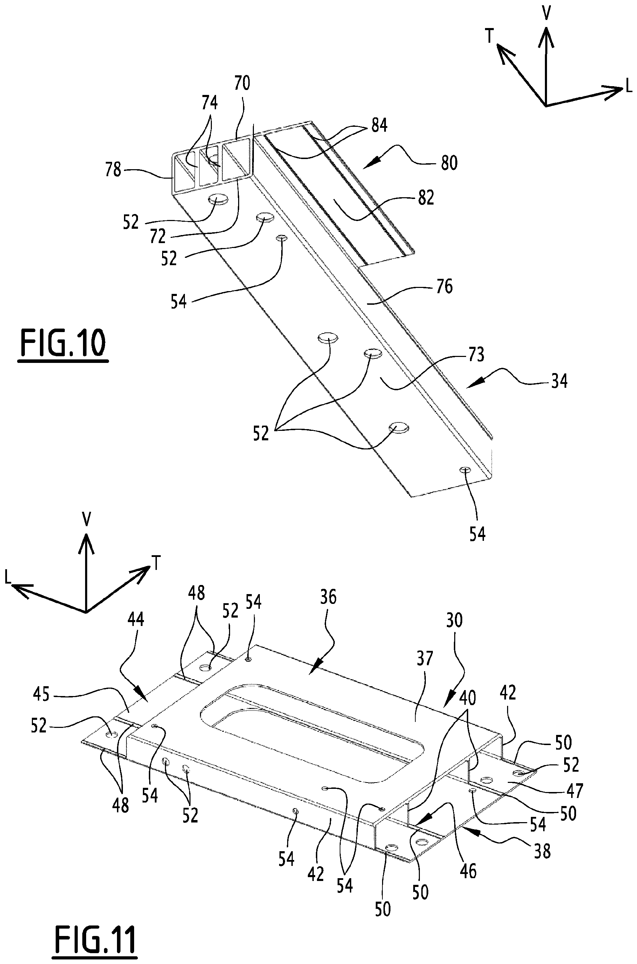

Chaque longeron 30, comme on peut le voir notamment à la figure 11, se présente sous la forme d'un caisson plat dans le plan horizontal qui est délimité par une paroi supérieure horizontale 36 et par une paroi inférieure horizontale 38 qui sont reliées entre elles par deux cloisons verticales longitudinales internes 40 et deux parois latérales longitudinales et verticales 42.

La paroi horizontale inférieure 38 est plus longue que la paroi horizontale supérieure 36 et elle comporte ainsi deux prolongements opposés d'extrémité avant 44 et d'extrémité arrière 46, chacun en forme de plaque horizontale dont la face supérieure 45, 47 respectivement est munie de quatre nervures en relief 48 et 50 respectivement.

Ainsi, les surfaces planes nervurées 45 et 47 constituent des surfaces de collage au sens de l'invention munies d'éléments en relief 48, 50.

Comme on peut le voir à la figure 11, il peut être prévu dans les prolongements 44 et 46 des orifices 52 aptes à recevoir par exemple des douilles ou analogues d'indexation, ainsi que des trous 54 pour le passage de rivets d'assemblage.

Des trous analogues 52 et 54 sont aussi prévus dans la paroi supérieure 36, dans les parois latérales 42 et dans la paroi horizontale inférieure 38.

Sur les figures, tous les trous destinés à recevoir un rivet de fixation sont, quelle que soit la pièce, désignés par la référence 54, les rivets associés étant désignés par la référence 90.

Les faces supérieures des portions d'extrémité avant et d'extrémité arrière de la paroi supérieure 36 du longeron 30 constituent des surfaces de collage lisses qui, comme cela sera expliqué par la suite, coopèrent avec des surfaces de collage complémentaires comportant des éléments en relief.

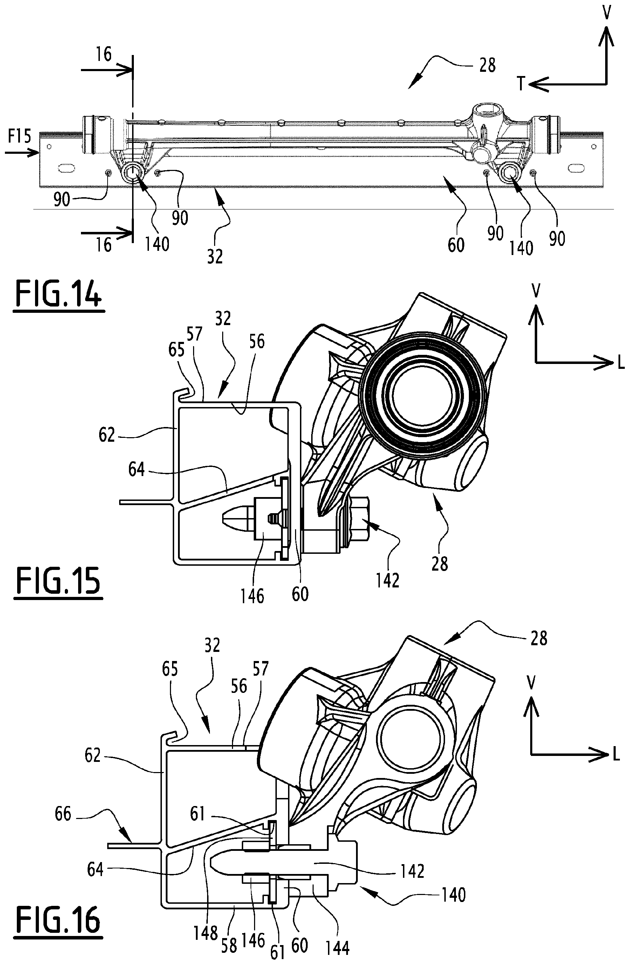

La traverse avant 32 est un profilé d'orientation générale transversale de section globalement rectangulaire (voir figures 15 et 16) qui comporte une paroi supérieure horizontale 56 partiellement découpée dans sa partie centrale, une paroi horizontale inférieure 58, partiellement découpée à ses deux extrémités transversales opposées, une paroi verticale avant 60 de plus forte épaisseur, une paroi transversale et verticale arrière 62, ainsi qu'une aile transversale de renfort interne 64 qui est inclinée par rapport à l'horizontale et qui s'étend sensiblement sur toute la longueur de la traverse avant 32.

La paroi supérieure 56, comporte, à chacune des deux extrémités longitudinales opposées, une rainure horizontale 65 ouverte vers l'avant.

Au voisinage de chacune de ses deux extrémités transversales opposées, la paroi verticale arrière 62 de la traverse avant 32 comporte, sensiblement à mi-hauteur, une aile horizontale et longitudinale 66 qui s'étend horizontalement vers l'arrière.

Chaque aile horizontale 66 est une aile d'assemblage et de fixation de la traverse avant 32 sur une portion en vis-à-vis de la face supérieure 37 de la paroi supérieure 36 d'un longeron associé 30.

A cet effet, la face inférieure 67 de chaque aile 66 est une face de collage qui comporte ici trois nervures longitudinales en relief 68.

Chaque aile horizontale 66 comporte deux trous 54 pour le passage de rivets d'assemblage et de fixation qui sont prévus pour coopérer avec les trous 54 correspondant de la portion d'extrémité avant de la face supérieure 37 de la paroi supérieure 36 du longeron 30.

Comme on peut le voir notamment à la figure 10, chaque traverse arrière 34 se présente sous la forme d'un profilé de section rectangulaire qui est délimité par une paroi horizontale supérieure 70 et une paroi horizontale inférieure 72 qui sont reliées entre elles par deux cloisons verticales et transversales internes 74 et par une paroi verticale et transversale avant 76 et une paroi verticale et transversale arrière 78.

Toutes les surfaces extérieures des parois 70, 72, 76 et 78 sont ici des surfaces lisses.

Dans le prolongement de sa paroi horizontale supérieure 70, la traverse arrière 34 comporte une aile horizontale 80 de fixation et d'assemblage qui s'étend longitudinalement vers l'avant.

L'aile 80 comporte une surface inférieure de collage 82 qui comporte deux nervures transversales 84.

Chaque face horizontale inférieure nervurée 82 est apte à coopérer avec une portion en vis-à-vis de la surface supérieure 37 de la portion d'extrémité arrière de la paroi horizontale supérieure 36 d'un longeron 30 associé.

Comme on peut le voir notamment à la figure 10, la paroi horizontale inférieure 72 de la traverse arrière 34 comporte deux trous 54 pour la fixation par des rivets, ainsi qu'une série de trous ou orifices 52 pour le passage de douilles.

En résumé, à titre d'exemple non limitatif, les surfaces d'assemblage et de fixation par collage des longerons 30 avec les traverses avant 32 et arrière 34 sont ici constituées notamment par les surfaces nervurées 67 et 82 des ailes 66 et 80, ainsi que par les surfaces nervurées 45 et 47 des prolongements 44 et 46.

Conformément aux enseignements de l'invention, la présence des nervures 68, 84 ou 48 et 50 permet, ici en coopération avec des surfaces opposées lisses, de prévoir un espacement entre les surfaces à coller qui est un jeu dimensionnel déterminé, par exemple de valeur sensiblement constante, qui est ape à recevoir de la colle ou un agent adhésif.

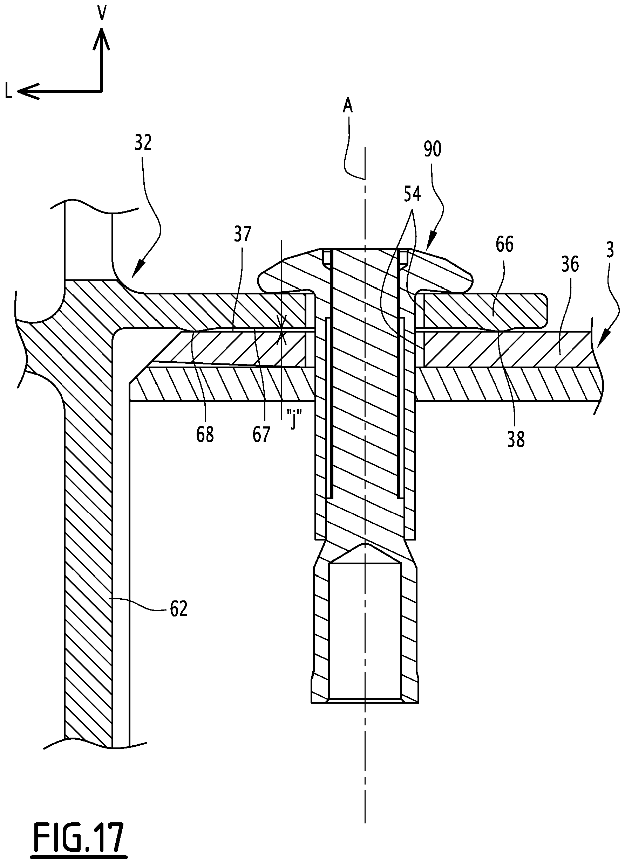

Ceci est illustré plus en détails à la figure 17 sur laquelle, ici entre la surface supérieure 37 de la paroi supérieure 36 d'un longeron 30 et la surface inférieure nervurée 67 d'une aile 66 de la traverse 30, il existe un jeu vertical "j" qui résulte de la coopération en appui des nervures 68 sur la surface supérieure 37 de la paroi supérieure horizontale 36 du longeron 30.

L'assemblage et le serrage, ici selon la direction verticale, des pièces 30 et 32 assemblées par collage est assuré au moyen d'une série de rivets à rupture de tige dont un exemplaire 90 est illustré en détail à la figure 17.

Le corps du rivet "à rupture de tige 90, qui est ici illustré avant l'opération proprement dite de rivetage, s'étend axialement selon son axe A à travers les trous alignés 54 prévus à cet effet, d'une part dans l'aile horizontale 66 et, d'autre part, dans la paroi horizontale supérieure 36.

Outre leur fonction d'assemblage et de serrage, chaque rivet à rupture de tige 90 lorsqu'il est introduit à travers deux trous alignés 54 assure un positionnement relatif "trou pour trou" ou "produit-produit" entre les pièces composants dont il assure la fixation par rivetage.

A titre de variante, un trou 54 peut être circulaire ou de forme oblongue.

La présence d'éléments en relief, tels que des nervures, permet une maîtrise la plus précise possible de l'épaisseur de la colle ou de l'adhésif formant un film entre les surfaces à coller afin de garantir les caractéristiques de tenue mécanique de l'assemblage par collage, cette valeur de l'espacement ou jeu "j" étant obtenue par le rivetage assurant un plaquage des pièces à assembler.

On obtient ainsi une épaisseur de colle ou d'adhésif quasiment constante et maîtrisée qui n'influe ni sur la géométrie, ni sur la robustesse de la structure de berceau 22.

Ici, la structure de berceau 22, au voisinage de son extrémité arrière, et sur chaque longeron 30, est aussi équipée d'un boîtier arrière droit, respectivement gauche, 92.

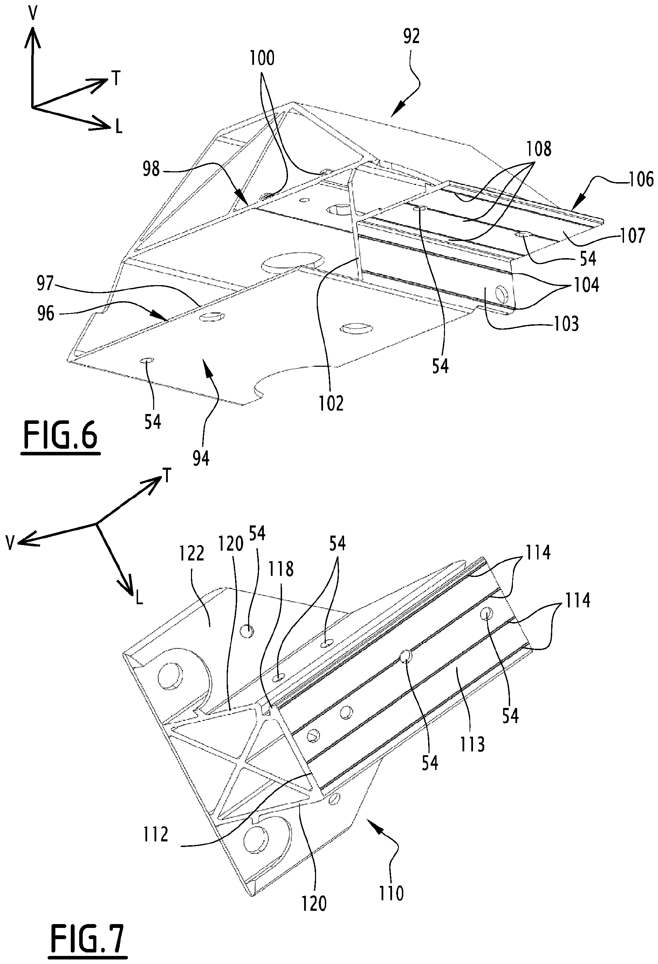

Chaque boîtier 92, dont l'un est illustré en détail à la figure 6, est ici une pièce extrudée et anodisée en aluminium Al 6063 T66.

Le boîtier 92 est une pièce de forme générale complexe qui comporte notamment une paroi inférieure horizontale 94 qui comporte un prolongement longitudinale arrière 96 dont la face supérieure 97 est lisse et est apte à coopérer par collage avec une portion en vis-à-vis de la surface extérieure 73 de la paroi horizontale inférieure 72 de la traverse arrière associée 34.

Le boîtier 92 comporte aussi une paroi horizontale supérieure 98 comportant deux rainures opposées 100 d'orientation longitudinale qui sont aptes à recevoir une plaque de renfort de fixation du type de celle qui sera décrite ultérieurement en référence à la fixation du boîtier de crémaillère 28 sur la traverse avant 32.

Le boîtier 92 comporte une paroi verticale et longitudinale 102 qui délimite une surface de collage 103 munie de deux nervures horizontales 104 et qui est apte à coopérer avec une portion en vis-à-vis de surfaces extérieures de la paroi latérale 42 du longeron associé 30.

Le boîtier 92 comporte aussi une aile horizontale et longitudinale 106 d'assemblage et de fixation qui s'étend sensiblement à mi-hauteur entre les parois horizontales 96 et 98 et dont la face inférieure horizontale nervurée 107 comporte trois nervures longitudinales 108.

La surface nervurée 107 est prévue pour coopérer par collage avec une portion en vis-à-vis de la surface extérieure 37 de la paroi horizontale supérieure 36 du longeron 30 associé.

A son extrémité avant et sur la face supérieure de la paroi horizontale supérieure 56 de la traverse avant 32, la structure de berceau 22 est aussi équipée d'une chape avant gauche, droite 110.

Comme on peut le voir à la figure 7, une chape 110, est ici encore une pièce extrudée, anodisée en aluminium Al 6063 T66 qui est fixée sur la traverse avant 32 essentiellement par sa paroi inférieure horizontale 112 qui s'étend transversalement.

La paroi horizontale 112 comporte une face ou surface inférieure de collage 113 qui comporte quatre nervures transversales 114 pour constituer une surface nervurée de collage qui coopère avec la portion en vis-à-vis de la face supérieure 57 de la paroi horizontale supérieure 56 de la traverse avant 32.

Pour garantir une bonne tenue mécanique, la paroi horizontale inférieure 112 de la chape 110 comporte une nervure latérale 118 qui est reçue dans la rainure associée 65 de la paroi supérieure 56 de la traverse avant 32.

Chaque chape 110 comporte aussi deux parois latérales verticales et transversales 120 dont chacune se prolonge par une aile transversale inclinée 122.

La fixation et la rigidité d'une chape 110, à l'avant et à l'arrière, est augmentée par une plaque de renfort 130 de profil complémentaire comportant notamment une paroi verticale transversale 132 et une aile supérieure inclinée 134.

Chaque plaque de renfort 130 comporte, sur ses surfaces 133 et 135 destinées à être collées et rivetées aux portions en vis-à-vis d'une part, de chape associée 110 et, d'autre part, de la surface extérieure de la paroi verticale avant 60 de la traverse avant 32 des plots en relief 136 qui jouent le même rôle que les nervures décrites précédemment.

La fixation du boîtier 28 de la crémaillère de direction 26 est ici assurée par vissage au moyen de deux ensembles vis/écrou 140 agencés aux deux extrémités transversales opposées du boîtier de crémaillère 28.

Chaque ensemble vis/écrou 140 comporte une vis 142 qui traverse une patte 144 appartenant au boîtier 28 qui est plaquée contre la surface extérieure de la paroi transversale avant 60 de la traverse avant 32.

La vis 142 est vissée dans un écrou complémentaire 146 agencé à l'intérieur de la traverse avant 32.

Pour la qualité et la rigidité de l'assemblage, une plaque intermédiaire en acier 148 est agencée à l'intérieur de la traverse avant 32, entre l'écrou 146 et la portion de surface intérieure en vis-à-vis de la paroi transversale avant 60 de la traverse avant 32.

Ici, à titre non limitatif, l'écrou est soudé sur la plaque de renfort 148.

La plaque de renfort 148 est ici une plaque de contour rectangulaire qui est reçue dans deux rainures transversales et horizontales internes 61 adjacentes à la surface interne de la paroi transversale avant 60 de la traverse avant 32.

La plaque de renfort en acier 148 comporte un trou central pour le passage du corps de la vis 142 et elle est initialement prépositionnée à l'intérieur de la traverse avant 32 dans laquelle elle peut être maintenue en position adéquate par deux rivets 90 assurant ici une seule fonction de tige de maintien en position de la plaque de renfort 148.

## Revendications

1. Structure (22) de berceau de véhicule automobile comportant :
- au moins deux longerons (30) en aluminium ou en alliage d'aluminium qui sont espacés transversalement ;
- au moins une traverse (32, 34), d'orientation transversale, en aluminium ou en alliage d'aluminium qui relie entre eux les deux longerons (30) dans laquelle la traverse (32, 34) est solidarisée aux longerons (30) de manière non démontable par collage en combinaison avec une fixation par rivets (90),
**caractérisée en ce que** des surfaces collées entre elles sont espacées d'un jeu dimensionnel déterminé (j) apte à recevoir de la colle ou un agent adhésif et **en ce qu'**au moins une zone de collage comporte une surface (103, 107, 113, 67, 82, 45, 47, 133, 135) munie d'éléments en relief (104, 108, 114, 68, 84, 48, 50, 136) coopérant avec une surface en vis-à-vis.

2. Structure selon la revendication 1, **caractérisée en ce que** lesdits éléments en relief déterminent un jeu dimensionnel (j) sensiblement constant entre ladite surface et ladite surface en vis-à-vis.

3. Structure selon la revendication 1, **caractérisée en ce que** ladite surface (103, 107, 113, 67, 82, 45, 47, 133, 135) munie d'éléments en relief (104, 108, 114, 68, 84, 48, 50, 136) est une surface plane.

4. Structure selon la revendication 1, **caractérisée en ce que** ladite surface (133, 135) est munie d'au moins un plot (136) en relief.

5. Structure selon la revendication 4, **caractérisée en ce que** ladite surface plane est munie d'une série de plots (136) en relief répartis sur ladite surface.

6. Structure selon la revendication 1, **caractérisée en ce que** ladite surface (103, 107, 113, 67, 82, 45, 47) est munie d'au moins une nervure (104, 108, 114, 68, 84, 48, 50) en relief.

7. Structure selon la revendication 6, **caractérisée en ce que** ladite surface est munie d'une série de nervures en relief réparties sur ladite surface.

8. Structure selon la revendication 1, **caractérisée en ce que** chaque longeron (30) comporte au moins une portion de paroi ou une portion d'aile dont une surface est collée et fixée par des rivets à la traverse.

9. Structure selon la revendication 8, **caractérisée en ce que** ladite surface collée est agencée à une extrémité longitudinale du longeron (30).

10. Structure selon la revendication 8, **caractérisée en ce que** ladite surface collée est une surface plane.

11. Structure selon la revendication 10, **caractérisée en ce que** chaque longeron (30) comporte deux portions de paroi ou d'aile comportant chacune une surface plane, qui sont parallèles et opposées et dont chacune est collée et fixée par des rivets (90) à la traverse

12. Structure selon la revendication 1, **caractérisée en ce que** la traverse (32, 34) comporte au moins une portion de paroi ou une portion d'aile dont une surface est collée et fixée par des rivets (90) à un longeron (30).

13. Structure selon la revendication 12, **caractérisée en ce que** ladite surface est agencée à une extrémité transversale de la traverse (32, 34).

14. Structure selon la revendication 12, **caractérisée en ce que** ladite surface est une surface plane.

15. Structure selon la revendication 14, **caractérisée en ce que** la traverse (32, 34) comporte deux portions de paroi ou d'aile comportant chacune une surface plane, qui sont parallèles et opposées et dont chacune est collée et fixée par des rivets (90) au longeron (30).

16. Structure selon la revendication 1, **caractérisée en ce qu'**elle constitue un berceau avant de véhicule automobile, et **en ce que** ladite au moins une traverse est une traverse avant (32) du berceau avant (22).

17. Structure selon la revendication 1, **caractérisée en ce qu'**elle comporte au moins un élément supplémentaire (92, 110) pour le montage d'un composant appartenant à une suspension du véhicule, et **en ce que** ledit élément est en aluminium et est solidarisé à un longeron (30) et/ou à la traverse (32, 34) de manière non démontable par collage en combinaison avec une fixation par rivets (90).

18. Structure selon la revendication 1, **caractérisée en ce qu'**elle comporte au moins une plaque de renfort (130) en aluminium ou en alliage d'aluminium qui est fixée à un longeron (30) et/ou à la traverse (32) de manière non démontable par collage en combinaison avec une fixation par rivets (90).

## Patentansprüche

1. Tragrahmenstruktur (22) für ein Kraftfahrzeug, aufweisend:
- mindestens zwei Längsträger (30) aus Aluminium oder Aluminiumlegierung, die in Querrichtung beabstandet sind;
- mindestens einem Querträger (32, 34) mit quer verlaufender Ausrichtung aus Aluminium oder Aluminiumlegierung, der die zwei Längsträger (30) miteinander verbindet, wobei der Querträger (32, 34) durch Verkleben in Kombination mit einer Befestigung mittels Nieten (90) nicht lösbar mit den Längsträgern (30) fest verbunden ist, **dadurch gekennzeichnet, dass** die miteinander verklebten Flächen um ein bestimmtes Abmessungsspiel (j) beabstandet sind, das geeignet ist, Klebstoff oder ein Haftmittel aufzunehmen, und dadurch, dass mindestens ein Klebebereich eine Fläche (103, 107, 113, 67, 82, 45, 47, 133, 135) aufweist, die mit Reliefelementen (104, 108, 114, 68, 84, 48, 50, 136) versehen ist, die mit einer gegenüberliegenden Fläche zusammenwirken.

2. Struktur nach Anspruch 1, **dadurch gekennzeichnet, dass** die Reliefelemente ein im Wesentlichen konstantes Abmessungsspiel (j) zwischen der Fläche und der gegenüberliegenden Fläche bestimmen.

3. Struktur nach Anspruch 1, **dadurch gekennzeichnet, dass** die Fläche (103, 107, 113, 67, 82, 45, 47, 133, 135), die mit Reliefelementen (104, 108, 114, 68, 84, 48, 50, 136) versehen ist, eine ebene Fläche ist.

4. Struktur nach Anspruch 1, **dadurch gekennzeichnet, dass** die Fläche (133, 135) mit mindestens einer reliefartigen Erhebung (136) versehen ist.

5. Struktur nach Anspruch 4, **dadurch gekennzeichnet, dass** die ebene Fläche mit einer Reihe von reliefartigen Erhebungen (136) versehen ist, die auf der Fläche verteilt sind.

6. Struktur nach Anspruch 1, **dadurch gekennzeichnet, dass** die Fläche (103, 107, 113, 67, 82, 45, 47) mit mindestens einer reliefartigen Rippe (104, 108, 114, 68, 84, 48, 50) versehen ist.

7. Struktur nach Anspruch 6, **dadurch gekennzeichnet, dass** die Fläche mit einer Reihe von reliefartigen Rippen versehen ist, die auf der Fläche verteilt sind.

8. Struktur nach Anspruch 1, **dadurch gekennzeichnet, dass** jeder Längsträger (30) mindestens einen Wandabschnitt oder einen Flügelabschnitt umfasst, dessen eine Fläche mit dem Querträger verklebt und mit Nieten daran befestigt ist.

9. Struktur nach Anspruch 8, **dadurch gekennzeichnet, dass** die verklebte Fläche an einem Längsende des Längsträgers (30) angeordnet ist.

10. Struktur nach Anspruch 8, **dadurch gekennzeichnet, dass** die verklebte Fläche eine ebene Fläche ist.

11. Struktur nach Anspruch 10, **dadurch gekennzeichnet, dass** jeder Längsträger (30) zwei Wand- oder Flügelabschnitte aufweist, die jeweils eine ebene Fläche aufweisen, die parallel verlaufen und gegenüber liegen, und die jeweils mit dem Querträger verklebt und mit Nieten (90) daran befestigt sind.

12. Struktur nach Anspruch 1, **dadurch gekennzeichnet, dass** der Querträger (32, 34) mindestens einen Wandabschnitt oder einen Flügelabschnitt umfasst, dessen eine Fläche mit einem Längsträger (30) verklebt und mit Nieten (90) daran befestigt ist.

13. Struktur nach Anspruch 12, **dadurch gekennzeichnet, dass** die Fläche an einem Querende des Querträgers (32, 34) angeordnet ist.

14. Struktur nach Anspruch 12, **dadurch gekennzeichnet, dass** die Fläche eine ebene Fläche ist.

15. Struktur nach Anspruch 14, **dadurch gekennzeichnet, dass** der Querträger (32, 34) zwei Wand- oder Flügelabschnitte aufweist, die jeweils eine ebene Fläche aufweisen, die parallel verlaufen und gegenüber liegen, und die jeweils mit dem Längsträger (30) verklebt und mit Nieten (90) daran befestigt sind.

16. Struktur nach Anspruch 1, **dadurch gekennzeichnet, dass** sie einen vorderen Tragrahmen für ein Kraftfahrzeug bildet, und dadurch, dass der mindestens eine Querträger ein vorderer Querträger (32) des vorderen Tragrahmens (22) ist.

17. Struktur nach Anspruch 1, **dadurch gekennzeichnet, dass** sie mindestens ein zusätzliches Element (92, 110) zur Montage eines Bauteils aufweist, das zu einer Aufhängung des Fahrzeugs gehört, und dadurch, dass das Element aus Aluminium ist und durch Verkleben in Kombination mit einer Befestigung mittels Nieten (90) nicht lösbar mit einem Längsträger (30) und/oder dem Querträger (32, 34) fest verbunden ist.

18. Struktur nach Anspruch 1, **dadurch gekennzeichnet, dass** sie mindestens eine Verstärkungsplatte (130) aus Aluminium oder Aluminiumlegierung aufweist, die durch Verkleben in Kombination mit einer Befestigung mittels Nieten (90) nicht lösbar an einem Längsträger (30) und/oder dem Querträger (32) fest verbunden ist.

## Claims

1. Motor vehicle cradle structure (22) including:
- at least two longitudinal side rails (30) made of aluminium or aluminium alloy that are spaced apart transversely,
- at least one transversely oriented cross member (32, 34) that is made of aluminium or of aluminium alloy and that connects the two longitudinal side rails (30) together,
in which the cross member (32, 34) is secured to the longitudinal side rails (30) in a non-dissociable manner by bonding in combination with a fastening using rivets (90),
**characterized in that** surfaces bonded together are spaced apart by a determined dimensional clearance (j) able to accept glue or an adhesive agent
and **in that** at least one bonding zone has a surface (103, 107, 113, 67, 82, 45, 47, 133, 135) provided with raised elements (104, 108, 114, 68, 84, 48, 50, 136) that cooperate with a facing surface.

2. Structure according to Claim 1, **characterized in that** said raised elements determine a substantially constant dimensional clearance (j) between said surface and said facing surface.

3. Structure according to Claim 1, **characterized in that** said surface (103, 107, 113, 67, 82, 45, 47, 133, 135) provided with raised elements (104, 108, 114, 68, 84, 48, 50, 136) is a flat surface.

4. Structure according to Claim 1, **characterized in that** said surface (133, 135) is provided with at least one raised contact (136).

5. Structure according to Claim 4, **characterized in that** said flat surface is provided with a series of raised contacts (136) distributed over said surface.

6. Structure according to Claim 1, **characterized in that** said surface (103, 107, 113, 67, 82, 45, 47) is provided with at least one raised rib (104, 108, 114, 68, 84, 48, 50) .

7. Structure according to Claim 6, **characterized in that** said surface is provided with a series of raised ribs distributed over said surface.

8. Structure according to Claim 1, **characterized in that** each longitudinal side rail (30) has at least one wall portion or one flange portion of which one surface is bonded and fastened using rivets to the cross member.

9. Structure according to Claim 8, **characterized in that** said bonded surface is arranged at a longitudinal end of the longitudinal side rail (30).

10. Structure according to Claim 8, **characterized in that** said bonded surface is a flat surface.

11. Structure according to Claim 10, **characterized in that** each longitudinal side rail (30) has two flange or wall portions, each of which has a flat surface, that are parallel and opposing and each of which is bonded and fastened using rivets (90) to the cross member.

12. Structure according to Claim 1, **characterized in that** the cross member (32, 34) has at least one wall portion or one flange portion of which one surface is bonded and fastened using rivets (90) to a longitudinal side rail (30) .

13. Structure according to Claim 12, **characterized in that** said surface is arranged at a transverse end of the cross member (32, 34).

14. Structure according to Claim 12, **characterized in that** said surface is a flat surface.

15. Structure according to Claim 14, **characterized in that** the cross member (32, 34) has two flange or wall portions, each of which has a flat surface, that are parallel and opposing and each of which is bonded and fastened using rivets (90) to the longitudinal side rail (30) .

16. Structure according to Claim 1, **characterized in that** it forms a motor vehicle front cradle, and **in that** said at least one cross member is a front cross member (32) of the front cradle (22).

17. Structure according to Claim 1, **characterized in that** it has at least one supplementary element (92, 110) for mounting a component belonging to a suspension of the vehicle, and **in that** said element is made of aluminium and is secured to a longitudinal side rail (30) and/or to the cross member (32, 34) in a non-dissociable manner by bonding in combination with a fastening using rivets (90) .

18. Structure according to Claim 1, **characterized in that** it includes at least one reinforcement plate (130) that is made of aluminium or aluminium alloy and that is fastened to a longitudinal side rail (30) and/or to the cross member (32) in a non-dissociable manner by bonding in combination with a fastening using rivets (90).
